# EUROPEAN PATENT APPLICATION

(11) **EP 0 822 474 A1**
(43) Date of publication of application: **04.02.1998**
(21) Application number: 97830386.5
(22) Date of filing: 24.07.1997
(51) Int. Cl.: G05D 1/02

(54) **System for orienting and guiding selfpropelled vehicles, and associated equipment**

(30) Priority: 01.08.1996 IT RE960065
(71) Applicant: Tecma S.r.l., 41043 Loc. Corlo, Formigine (Modena) (IT)
(72) Inventor: Cargioli, Luigi, 41100 Modena (IT)
(74) Representative: Lanzoni, Luciano

(57) **Abstract**

The system for orienting and guiding self-propelled vehicles comprises a plurality of inertia sensors (15,16,17) connected to an electronic computer to which the data relating to the route travelled by the said vehicle (15), such as the steering angle and the path length, is also sent.

A multiple head (20) for occasional route detection communicates to the computer (12) the data relating to deviation of the actual route with respect to an ideal route, the path data of which are memorized in the computer (12).

Both the data provided by the inertia sensors (15,16,17) and the deviations detected by the multiple head (20) result in route correction of the directional components of the vehicle (15).

## Description

The present invention relates to a system for orienting and guiding self-propelled vehicles, such as, in particular, those intended for transporting, loading and unloading goods within goods storage areas, and more specifically vehicles equipped with members for engagement with empty or pre-loaded pallets, such as, for example, vertically guided motor-driven forks.

These vehicles, known in their most basic version by the name "trucks", are widely used within goods storage areas, in particular for operations involving the transfer of palletized goods from the production zone to the storage zone, and from here to the loading zone.

Another use of self-propelled vehicles within the production zone of a factory relates, for example, to the supplying of the assembly lines with details of the finished product, or components thereof; or also to the transfer of semi-finished parts from one line to another; or also to the formation of a batch of goods to be depatched by drawing from a storage zone.

Usually such operations involve shuttle movements of a repetitive type, where the vehicle performs the function of setting off from a known position so as to reach, via a predetermined path, a position which is also known, loading the pallet, and then returning to an end-of-task position and unloading the pallet transported during the journey.

Hitherto systems for automatically guiding shuttle vehicles are known, where said vehicles perform the task of positioning themselves in front of the pallet to be loaded, engaging with the pallet and raising it, transporting the pallet along a given path and finally unloading the pallet in a predetermined final position.

These known systems use, for example, an electric conductor which is buried underground in the operating zone of the vehicle and conveys electric current such as to generate an electromagnetic field which is detected by sensors located on board the vehicle and which determines the path followed by the vehicle, the latter being controlled during the other set operations, such as for example starting, stopping, loading movements, etc., from a fixed radio console. This system involves not only the drawback of - in some cases huge - fixed installation costs for laying the cables along all the possible operating zones of the vehicle, but also, and in particular, the limitation that it is not adaptable to the need for expansion or deviations - even of a minor nature - of the paths, the trajectory of the vehicle being strictly dependent upon the position of the underground guide cable.

Moreover, when the flooring is of the metallic type, even along short sections, the system can no longer be used since the magnetic-field readers located on board the vehicle are no longer able to sense the electromagnetic field produced by the underground conductor.

A second known system for automatically guiding shuttle vehicles involves the use of laser rays which are continuously emitted by the vehicle and which interact with reflectors positioned along the path, allowing the distance of the vehicle from fixed reference points to be calculated by means of a computer and enabling the route commands relating to a predefined itinerary to be sent to the vehicle guiding system.

This laser-ray system moreover has the serious drawback that it is dangerous for operators present in the area of activity of the vehicle on account of possible damage to the eyes caused by the direct, or even reflected, effect of the laser rays.

A third system uses, instead of laser rays, radiofrequency signals emitted by a plurality of transmitters positioned along the path of the vehicle, such as to allow determination of the position thereof using the data provided by an on-board receiver and processed by a computer.

This system in reality has proved to be complex, since it cannot be used within structures of the metallic type, as well as not entirely reliable on account of the reflections of the emitted radio signals which cause disorientation of the guiding system as a result of false echoes.

It is moreover still not known what physiological effect is produced on man by the permanent exposure to widespread and continuous radiofrequency fields, such as the field used by the radiofrequency guiding system described above.

The objects of the present invention is to provide a system for automatically guiding self-propelled vehicles which overcomes the drawbacks described above and which is therefore flexible, in that it may be rapidly adaptable so as to allow operation of the vehicle from any one point to another point in the factory area, is harmless for the operators, and reliable and precise in carrying out the tasks which it performs.

The objects are obtained by installing on the vehicle a plurality of inertia sensors together with a head (encoder) for reading the steering angle and the path length and a multiple head for occasional route detection; interfacing the data provided by the aforementioned sensors and readers with a programmable electronic computer which operates, in accordance with a predetermined ideal-path program, both the drive motor and the vehicle direction motor, where the deviations, in relation to the ideal path, detected both by the inertia sensors and the multiple head for occasional route detection result in the introduction of path corrections. The invention will emerge more clearly from the illustration of an example of application described hereinbelow with the aid of seven illustrative plates. In the drawings:
Plate I shows a plan view of a self-propelled vehicle for loading, transporting and unloading pallets, which is provided with an orienting and guiding system constructed in accordance with the invention;
Plate II shows a partially sectioned, front view of the same vehicle;
Plate III is a side view, also partially sectioned so as to show the vertically guiding gantry for the pair of forks, as well as the pair of horizontal slides for the forwards/backwards movement of the fork assembly;
Plate IV shows a rear view;
Plate V shows in block-diagram form the set of sensor and actuator (drive) elements which are interfaced with a processing computer; whereas
Plate VI shows a schematic illustration of a loading and unloading assignment, during the two stages of the outgoing and return journey with respect to a standby base position;
Plate VII shows finally a detail of three different travel-path stages of the multiple reading head (positioned on the vehicle) in relation to a reference element fixed in the ground, formed in the case in question by a "V" made of ferromagnetic material, with analysis of the various path sections which may be detected.

With reference to these figures, 1 denotes a self-propelled vehicle on which an orienting and guiding system according to the invention is installed.

Said vehicle consists of a steel frame which is composed of two rear longitudinal members 2,2' carrying the same number of idle wheels 3,3', a central body 4 housing the electric supply batteries of the vehicle, and a front part 5 having housed inside it the orienting and guiding equipment.

The front body 5 is provided, underneath it, with a third driving and steering wheel 6 which is operated by an electric drive motor 7 via known trasnmission means 8, the entire assembly of the wheel 6 and associated motor 7 with the transmission members 8 rotating about a vertical axis ○ which forms the steering centre of the wheel 6.

Rotation of the wheel 6 about the axis ○ is possible through a complete angle of 360° and performed by the directional motor 9.

It is envisaged that both the forward movement of the vehicle and the direction of movement are continuously read by means of encoders 10, 11 interfacing with a computer 12 which, for the sake of covenience, has been positioned on the vehicle inside the control unit contained in the front body 5.

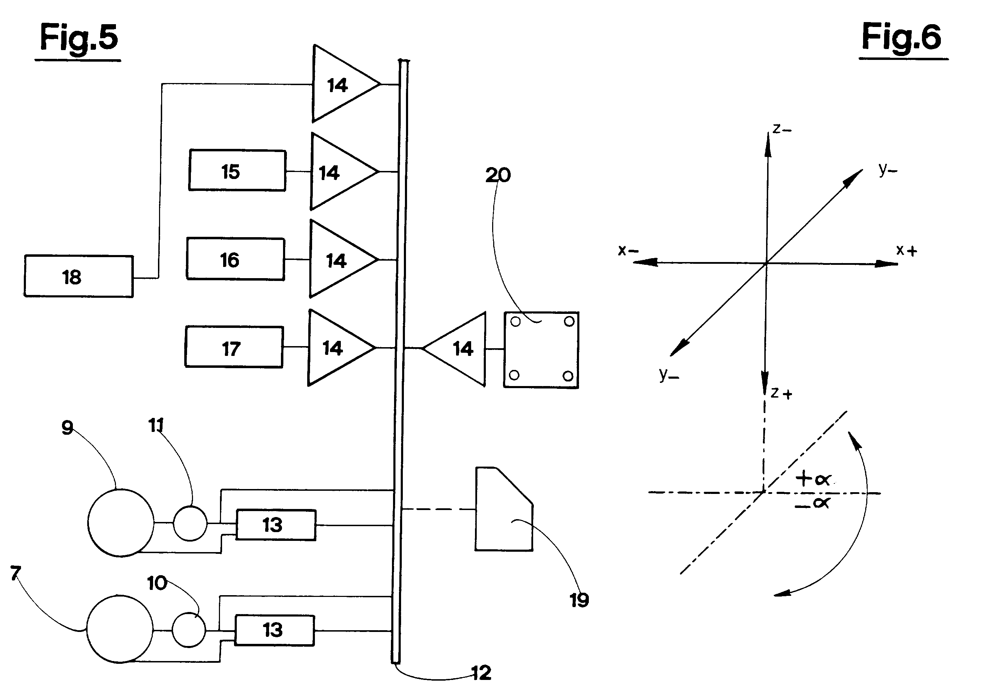

Said computer, not shown in the plates, is shown schematically in Fig. 5, in which 13 denotes schematically an operating actuator and 14 a signal amplifier.

In the same diagram of Fig. 5, 15 denotes an accelerometer sensitive along the axis X-X which is understood as being parallel to the longitudinal axis of the vehicle and passing through the steering centre ○; 16 denotes a gyroscopic element sensitive to the variation in angular movement α of the vehicle about the axis ○; 17 denotes an accelerometer sensitive along the axis Y-Y understood as passing through steering centre ○ and perpendicular to the axis X-X on the travel plane.

18 denotes, finally, a temperature sensor element having the function of compensating for thermal drift phenomena of the sensors 15, 16, 17 described above; for the sake of convenience of illustration, the temperature variable is shown along the axis Z-Z, the set of physical parameters detected by the inertia sensors provided on the vehicle being represented by the diagram in Fig. 6. Still with reference to Fig. 5, 19 denotes a fixed control console, external to the vehicle, which is connected via radio to the vehicle itself; an operator may intervene via a suitable keyboard of the console 19 so as to send to the vehicle the commands for programming of the travel path, starting and stopping, and obtain from the vehicle the required data regarding the operating parameters detected and present in the computer's memory.

Finally, it is envisaged that the vehicle is fitted with a multiple travel-path probe, schematically indicated by 20 in Fig. 5 and having the function of exploring the travel path of the vehicle so as to effect occasionally readings at fixed reference points specially provided on the path itself.

Said multiple probe 20 consists of four individual magnetic-field detection elements which are located at the vertices of a rectangle and installed close to the ground. Said detection elements are identified respectively by the numbers 21, 22 (front elements) and 23, 24 (rear elements).

The vehicle 1 also comprises at the opposite end to the drive wheel 6 a known member for engaging with and raising pallets, consisting of pair of thin bars 25 (called "fork") located alongside one another and mounted on a robust plate 26 which is able to slide, when commanded, on a gantry frame 27.

It is envisaged that the gantry frame 27, at its base, is fixed on a double carriage 28 engaged on two straight guides 29,29' parallel to the rear longitudinal members 2,2' of the frame.

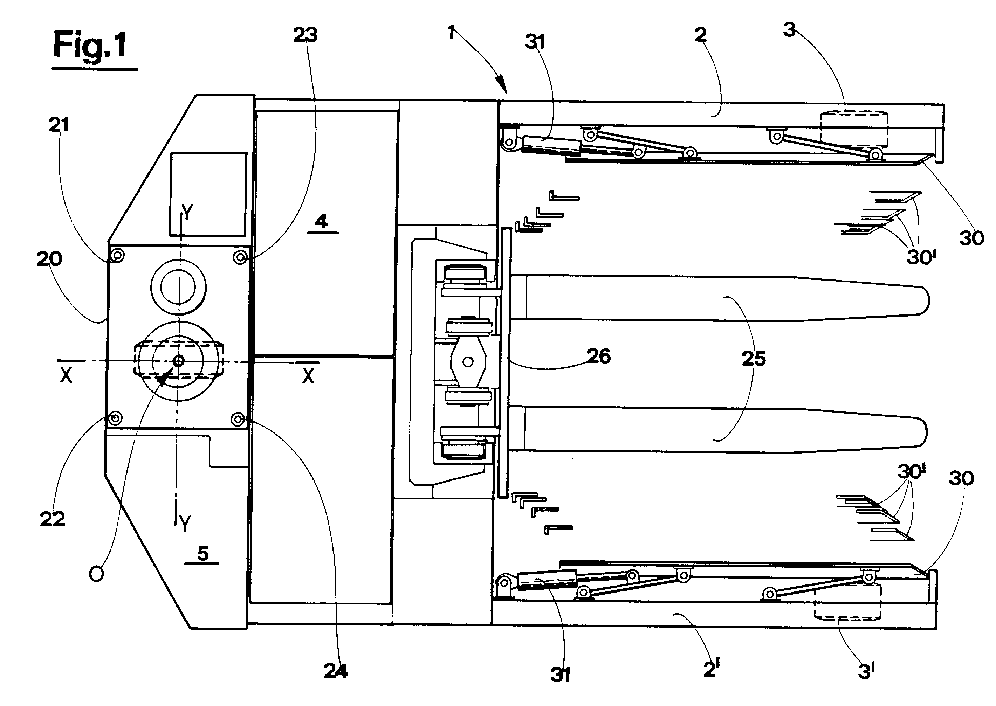

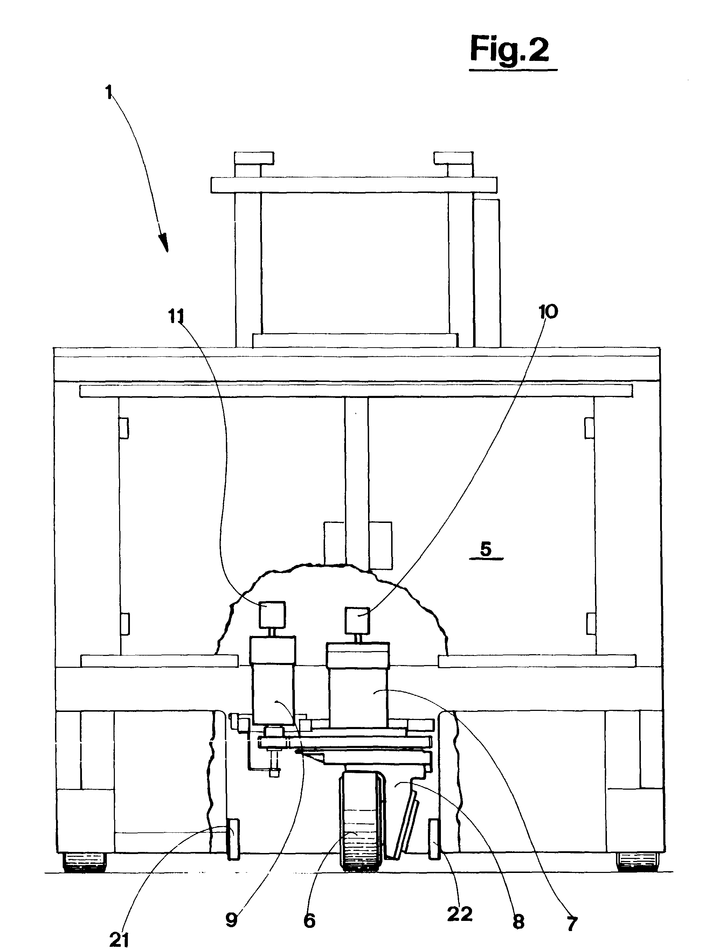

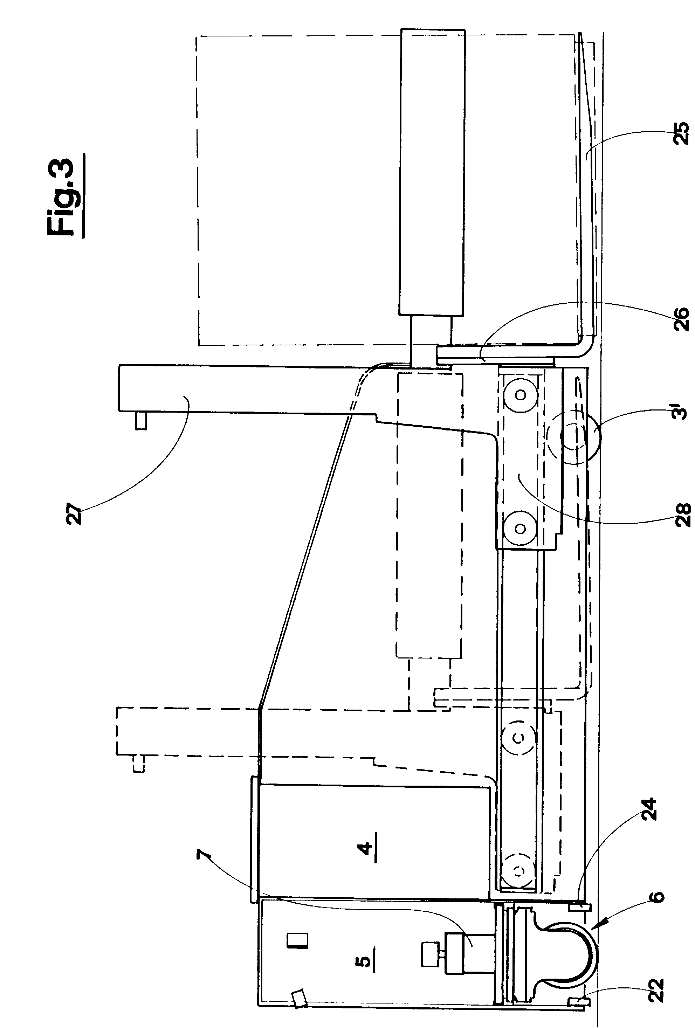

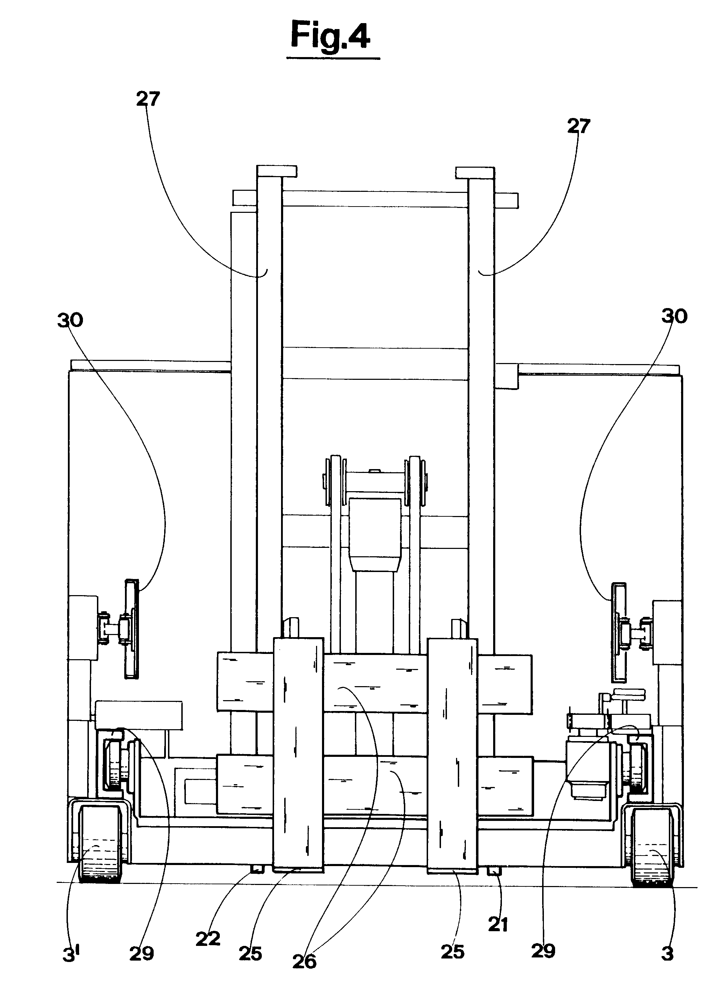

Said carriage, which is actuated, like the sliding plate 26, by means of hydraulic actuators, has the function of allowing the longitudinal feeding movement of the forks, so as to project from the rear contour of the vehicle, as illustrated in Fig. 3, in such a way as to engage with the pallet, raise it, and retract inside the contour of the vehicle, as indicated by broken lines in Fig. 3.

Articulated parallelogram members 30 are also provided, being designed to centre and constrain laterally the pallet during transportation.

These members 30 are positioned laterally with respect to the internal compartment of the vehicle intended to receive the pallet and are operated by hydraulic actuators 31 so as to close, reaching the end positions 31' shown in broken lines where the pallet is retained and centred during transportation.

It is envisaged that all the movement sequences of the vehicle components are controlled by the control console 19, via the computer 20, using a commercially available computer program of simple design.

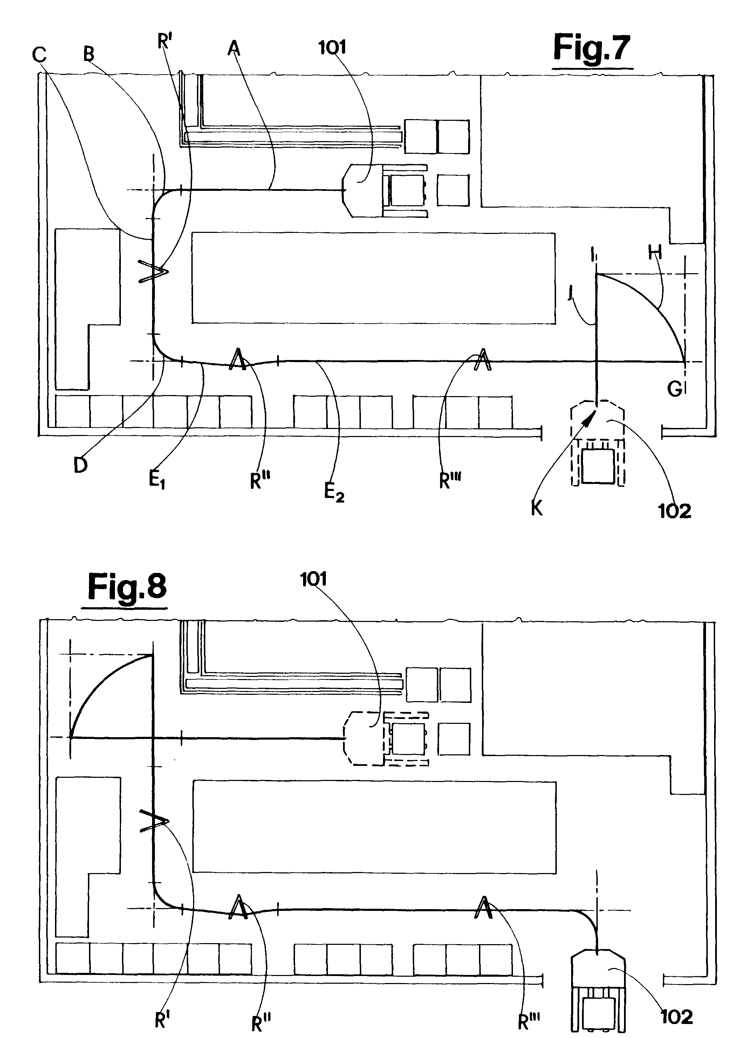

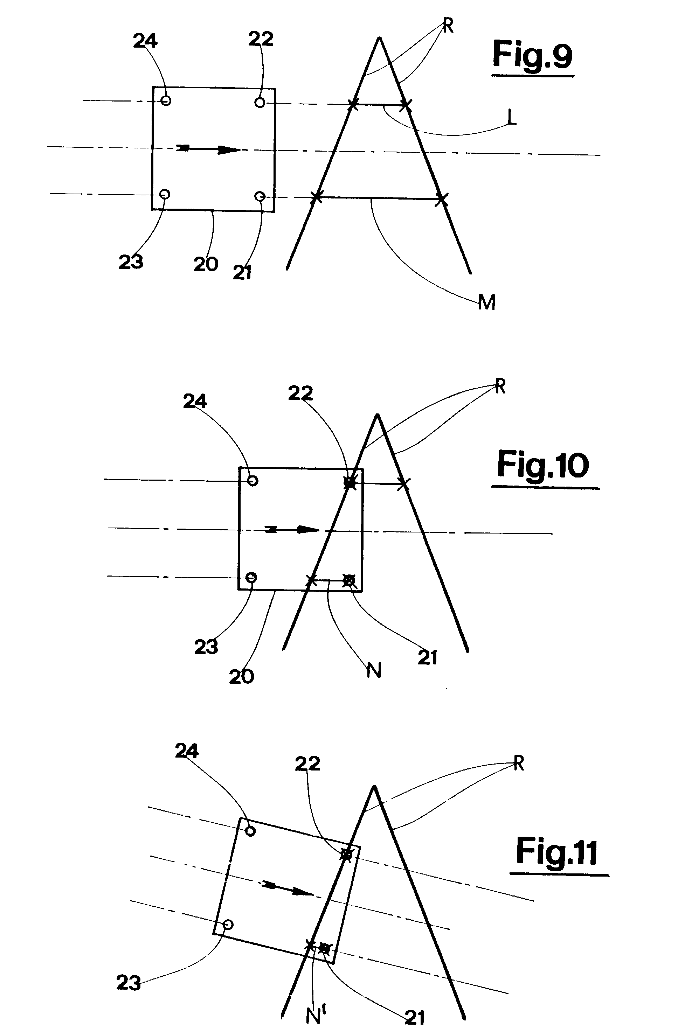

Fig. 7 shows an example of embodiment of a programmed path followed by the vehicle 1, from the starting position 101 to the arrival position 102, on a flat circuit with a uniform surface, such as, for example, inside a warehouse.

The vehicle is operated so as to cover initially a section A along the axis X-X. It is envisaged that, if the inertia sensors 15, 16 and 17 detect deviations from the trajectory of the path, the computer 12 effects on the steering wheel 6 those corrections in the route followed and path length, which are necessary for bringing the vehicle back onto the ideal trajectory. The correction program is not illustrated here in that it is the simple result of computer programming and depends on the steering geometry and forward movement of the vehicle which varies from case to case.

Upon reaching the end of the section A, the length of which is measured by means of the drive encoder 10, the wheel 6 is operated so as to perform a steering movement of 90° by means of the motor 9, the steering angle being read by means of the encoder 11.

At the end of the path of the 90° arc B, the vehicle is operated so as to cover a straight section C. During this travel path, the vehicle passes over a fixed reference element R' which is detected by the multiple travel-path probe 20.

Said reference element consists of a "V" made of ferromagnetic material and postioned on the ground such that the its two separate arms may be detected by the individual detection elements 21, 22, 23 and 24 forming the multiple probe 20.

The functioning mode of the reference element R' and the following fixed reference elements R", R"', etc., which are regularly sensed during the travel movement, is illustrated in Figures 9, 10 and 11.

Fig. 9 shows a theoretical regular travel path, where the trajectory of the multiple travel-path probe 20, advancing in the direction indicated by the arrow, coincides with the theoretical trajectory memorized in the computer.

In this case, the distances of the sections L, M, detected respectively by the probe 22 and the probe 21, coincide with the memorized path values and no route correction is undertaken.

Should there be a travel path deviation in a direction parallel to the theoretical path, the detected values of the sections L, M would both be greater (or smaller, depending on the side where the deviation occurs) than the theoretical values memorized.

The computer program in fact, whenever the multiple probe 20 encounters a reference element R, carries out a comparison of the lengths of the sections L, M detected, with the theoretical values. In the case where a deviation is detected, a route correction program intervenes so as to bring back the vehicle onto the theoretical travel path by acting on the directional motor 9.

The purpose of the back-up probes 24, 23 is that of establishing an exact and known point for starting of the correction manoeuvre.

When the vehicle 1 travels in reverse, the functions of the probes 21, 22 and 23, 24 will be inverted, and the route correction program adapted to the different steering geometry of the vehicle 1.

The multiple probe 20 is also able to detect angular deviations with respect to the theoretical route; Fig. 10 shows the section N covered by the probe 21 at the moment when the probe 22 coincides with the reference element R: it is obvious that this section will be greater, or smaller, than the memorized theoretical section of the path, depending on whether the angle of incidence of the actual travel path is positive or negative with respect to the theoretical path.

Fig. 11 shows, precisely, an example of a path where the angle of incidence of the actual path is negative: in this case N'<N and this comparation performed by the computer will give rise to a consequent angular route correction.

An example of such a circumstance is shown in Fig. 7 at the location of the reference element R", which simulates a negative angular deviation with respect to the theoretical path and shows a correction trajectory immediately following the reference element R".

Terminating the example of the travel path shown in Fig. 7, it is envisaged that the vehicle, once it has positively negotiated the reference element R"', travels along the section F as far as the point G and then travels over a 90° arc of a circle as far as I, then reversing along the section J until the drive wheel 6 is positioned at the arrival point K, thus reaching the desired final position 102.

Fig. 8 shows an illustration of the return travel path of the vehicle 1 from the position 102 to the original position 101, simulating in this case also an accidental deviation at the location of the reference element R" immediately followed by a route correction.

Operation of the orientation system envisages first of all memorization, in the computer, of an ideal path of the vehicle 1 obtained by means of manual guiding thereof via the keyboard of the control console 19.

This theoretical path will provide the memory of the computer with all the data necessary for effecting any route corrections, when a working task is assigned to the vehicle 1 along a predetermined path.

It is envisaged that the vehicle 1 is provided with known presence sensors, not illustrated in the Figures, in order to avoid interference with objects or persons accidentally present on travel path.

It is also envisaged, in the program for automatic guiding of the vehicle 1 that, should one of the reference elements R not be detected by the multiple probe 20 within a given time interval, on account of an excessive route deviation, the vehicle performs an emergency stop a few centimetres from the failed detection point.

Although illustrated in the example described above as applied to a three-wheeled vehicle, one of which is for driving and steering, the invention may also be applied to other types of land vehicles, for example with four wheels, the characteristics of the orienting and guiding system remaining unchanged, and by making only simple and banal variations to the route correction program, so as to adapt it to the different conditions of the steering geometry.

## Claims

1. System for orienting and guiding self-propelled vehicles radio-commanded from a fixed control station and controlled by means of an electronic computer with function transducers, characterized in that it comprises a plurality of inertia sensors (15, 16, 17) on board the vehicle.

2. System according to Claim No. 1, characterized in that the inertia sensors consist of an acceleration sensor along the axis of the vehicle (15) and a second acceleration sensor (16) transverse to the axis of the vehicle.

3. System according to the preceding Claim Nos. 1 and 2, characterized in that the plurality of inertia sensors comprises a gyroscopic element (16) sensitive to the variation in angular movement.

4. System according to Claim No. 1, characterized in that it comprises at least one probe (20) which interacts with fixed reference elements (R) and sends the reading of the data to a computer (12) enabled to perform route corrections of the directional components (9).

5. System according to the preceding Claim No. 4, characterized in that the probe (20) consists of a plurality of basic probes (21, 22, 23, 24).

6. System according to Claim No. 4, characterized in that the fixed reference elements (R) consist of "V" elements made of ferromagnetic material.

7. System according to Claim No. 4, characterized in that at least one of the basic probes (21, 22, 23, 24) is sensitive to electromagnetic fields.

8. System according to Claim No. 1, characterized in that it comprises a thermal probe (18) which performs correction of the data provided by the inertia sensors.

9. System according to Claim No. 1, characterized in that the program of the computer (12) comprises a memory space for recording an ideal path of the vehicle performed with direct guiding on the control console (19).

10. System according to Claim No. 1, characterized in that it comprises a movement reading element (10) and a directional reading element (11) connected to a computer (12).

11. System according to Claim Nos. 1, 9 and 10, characterized in that the program of the computer (12) comprises a route correction sub-program which interacts with the directional motor (9) and is activated by at least one of the inertia sensors (15, 16, 17).

12. System according to Claim Nos. 1, 10 and 11, characterized in that the program of the computer (12) comprises a route correction sub-program which interacts with the directional motor (9) and is activated by at least one of the sensors (21, 22, 23, 24) of a multiple travel-path probe (20).

13. Equipment for orienting and guiding self-propelled vehicles, characterized in that it comprises on the vehicle a plurality of inertia sensors (15, 16, 17) together with a head (encoder) for reading the steering angle (15) and path length (17), and a multiple head (20) for occcasional route detection.

14. Equipment for orienting and guiding self-propelled vehicles according to Claim No. 13, characterized in that it comprises a programmable electronic computer (12) which controls, in accordance with a predetermined ideal travel-path program, both the drive motor (7) and the directional motor (9) of the vehicle, where the deviations detected both by the inertia sensors and the multiple head for occasional route detection with respect to the ideal path, result in the introduction of corrections to the travel path.
